# EUROPEAN PATENT APPLICATION

(11) **EP 2 261 546 A1**
(43) Date of publication of application: **15.12.2010**
(21) Application number: 09162281.1
(22) Date of filing: 09.06.2009
(51) Int. Cl.: F16L 59/18, G01N 27/22

(54) **Method and system for assessing corrosion and/or degradation of a pipeline**

(71) Applicant: Nederlandse Organisatie voor Toegepast -Natuurwetenschappelijk Onderzoek TNO, 2628 VK Delft (NL)
(72) Inventor: Volker, Arno Willem Frederik, 2622 KN Delft (NL); Verschoor, Robert Iman, 2986 SG Ridderkerk (NL); Koek, Erik Alexander, 2321 EX Leiden (NL); van den Berg, Ronald Peter, 2548 AK Den Haag (NL)
(74) Representative: Hatzmann, Martin

(57) **Abstract**

Method and system for assessing corrosion and/or degradation of a pipeline for the transportation of any medium, comprising an array of local sensor modules over the length of the pipeline and arranged for measuring local temperature and humidity values at the pipeline and means for transmitting those values, along with sensor module identifiers, to processing means, as well as means for receiving the sensor module identifiers and local temperature and humidity values measured at the pipeline and inputting them into assessment means arranged for assessing local indicators related to the local corrosion and/or degradation of the pipeline. Wireless transmission means may be used for transmitting the values, along with the sensor module identifiers, to the processing means. The local sensor modules may comprise means for harvesting energy from sunlight and/or temperature differences between the pipeline and its environment.

## Description

The present invention concerns a method and system for assessing or predicting corrosion and/or degradation of a pipeline for the transportation of any medium.

Corrosion of pipelines is a serious problem in industry which leads to large inspection and maintenance costs. One special difficulty is that many pipelines are surrounded by insulation material, in order to maintain the medium inside the pipe at its right temperature or reduce energy costs. Corrosion of the pipeline under the insulation layer is badly trendable, i.e. the corrosion is unpredictable in time, location and severeness. The reason of this is mainly that the environmental conditions to which the different parts of the pipeline are exposed, are unknown. In the present practice parts of the insulation at several locations insulation sheet of the pipeline is removed over a certain distance and the pipeline is inspected for corrosion. In practice 5 - 10% of the total pipe length appears to be affected, i.e. the metal may be corroded and/or the pipe coating, applied to the pipe for rust prevention, may be degraded. In general repair of the pipe by removing the rust and applying a new rust prevention coating is not highly effective as the corrosion tends to continue and the repair coating does not adhere very well to the affected pipe surface.

One aim of the present invention is to provide a method and a system which will reduce the expensive and time consuming operations for inspecting (parts of) the pipeline.

Another aim is to provide remote monitoring of the (estimated) corrosion of the pipe wall and/or degradation of its coating in an early stage or even still before it really started to occur.

Yet another aim is an improved, more intensive coverage of the pipeline monitoring.

Still another aim is to provide a mapping of the whole pipeline system and of its locations which need extra attention in view of metal corrosion or coating degradation.

The invention is based on the understanding that it is not necessary to inspect the surface of the pipes for corrosion/degradation when some essential measuring values at or in the neighbourhood of the pipe surface could be measured, in particular the local temperature and the humidity, which values are used for assessment or estimation of the local pipe wall corrosion and/or pipe coating degradation, based on previously known corrosion/degradation (prediction/assessment) models.

The method for assessing corrosion and/or degradation of a pipeline preferably comprises the following steps:
- providing an array of local sensor modules over the length of the pipeline, preferably at the pipeline's bottom area, the sensor modules being arranged for measuring local temperature and humidity values at the pipeline and transmitting those values, along with sensor module identifiers, to processing means;
- receiving said sensor module identifiers and local temperature and humidity values measured at the pipeline and inputting them into assessment means arranged for assessing local indicators related to the local corrosion and/or degradation of the pipeline.

Although the local temperature and humidity values may, in general, be measured at or in the vicinity of the pipe wall (and pipe wall coating), in many cases the pipe will be surrounded by a layer of insulation material. In those cases the local sensor modules may be arranged to measure the local temperature and humidity values within the insulation material surrounding the pipeline.

Besides, temperature values may be input into the assessment means, related to the medium flowing through the pipeline, as the (course of the) medium temperature (and thus of the pipeline wall) may improve the corrosion/degradation prediction model. Moreover, the temperature and humidity values related to the temperature and humidity outside the pipeline, e.g. due to the weather, may be input into the assessment means. Especially in areas at sea it may be preferred that the local sensor modules additionally are arranged to measure the chloride, ammonia, nitride contents and/or the contents of other potentially corrosive components, as in such areas such contents will be important factors for corrosion/degradation forming.

A system for performing the method according to the invention preferably comprises an array of local sensor modules over the length of the pipeline and arranged for measuring local temperature and humidity values at the pipeline and means for transmitting those values, along with sensor module identifiers, to processing means, as well as and means for receiving the sensor module identifiers and local temperature and humidity values measured at the pipeline and inputting them into assessment means arranged for assessing local indicators related to the local corrosion and/or degradation of the pipeline.

Preferably, the system comprises wireless transmission means for transmitting the temperature and humidity values, along with the sensor module identifiers, to the processing means.

The local sensor modules may comprise or may be connected to means for harvesting energy from sunlight and/or any other light source and/or means for harvesting energy from temperature differences between the pipeline and its environment.

Hereinafter the invention will be elucidated referencing to some figures.
- Figure 1: shows part of an insulated pipe including a number of sensor modules and a processing module;
- Figures 2a-c: illustrate known relationships between some input data and local pipeline corrosion/degradation rates.

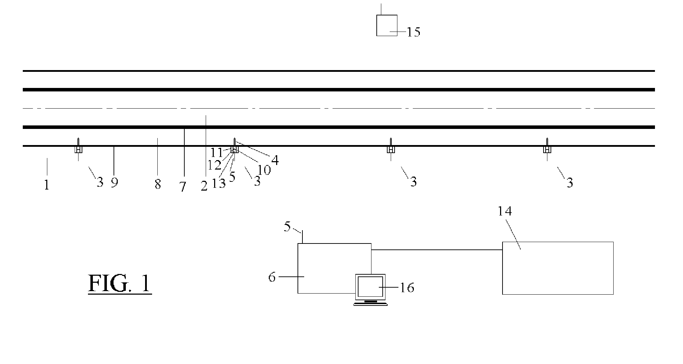

The configuration shown in figure 1 is aimed at the assessment (or prediction) of corrosion and/or degradation of a pipeline 1 for the transportation of any medium 2. An array of local sensor modules 3 is provided over the length of the pipeline 1, which are arranged for measuring local temperature and humidity values, by means of a measuring probe 4, at the pipeline and transmitting, via a wireless path, represented by antennas 5, those values, along with sensor module identifiers for each sensor module, to a processing system 6. The processing system 6 receives the sensor module identifiers and local temperature and humidity values measured at the pipeline and inputs them into a (software) assessment module which is arranged for assessing local indicators related to the local corrosion and/or degradation of the pipeline.

As can be seen in figure 1, the wall 7 of the pipeline 1 is surrounded by a layer 8 of insulation material which is covered by metal protection sheet material 9, which is not watertight (so rain and snow may penetrate into the insulation layer 8). The local sensor modules 3 are arranged to measure the local temperature and humidity values within the insulation material 8 surrounding the pipeline 1. As shown, the probes 4 are inserted through the protection layer 9, and are thus capable to measure the temperature and humidity inside the insulation layer 8 and to transmit the temperature and humidity values to the processing system 6 via the antennas 5.

The local sensor modules comprise means for harvesting energy from temperature differences between the pipeline and its environment, e.g. by means of Peltier elements which extend inside the insulation layer 8 and outside the insulation layer 8; due to the temperature difference inside and outside the Peltier element generates electricity for loading a battery 11, which is connected to feed a small local processor which collects and pre-processes the temperature and humidity values detected by the probe 4 and transmits them, including a (unique) module identifier, to the processing system 6, via a transmitter 13 and the antennas 5.

The local sensor modules may, besides, comprise, or be connected to, means for harvesting energy from sunlight and/or any other light source, i.e. small solar panels etc., which are not shown explicitly in figure 1.

In the processing module 6 the measured temperature and humidity data are converted into (local) corrosion and/or degradation data, based on several presumptions. Except the temperature and humidity data, also the physical course of the pipeline may be considered in the assessments, e.g. the occurrence of curves, branches etc. in the pipeline, which can be extracted from a pipeline management system 14 and/or sensor module positioning means which are discussed hereinafter.

Moreover, temperature values may be input into the assessment means, related to the fluid flowing through the pipeline, which temperature values may be derived from the pipeline management system 14 and/or which can be measured at the pipeline itself at some locations.

Also temperature and humidity values related to the temperature and humidity outside the pipeline, e.g. due to the weather, may be input into the assessment means, e.g. by means of one or more weather stations 15.

The local sensor modules may additionally be arranged to measure the chloride content, when the pipelines are located in the neighbourhood of the sea.

In order to be able to process the locally sensed temperature and humidity values correctly the sensor modules should be linked to their individual locations. Two ways may be followed:
- One way is to link each sensor module identifier to its position, enabling that the processing means are capable to derive from the identifiers which received temperature/humidity data originate from which (sensor module) position. In this option the sensor module identifiers have to be linked initially, during installation of the sensor modules, to their global positions (e.g. determined by using a GPS receiver).
- Another way is to provide each sensor module with means for determining the sensor module's global position, e.g. a small GPS receiver, and transmitting that global position data to the processing means, together with or instead of the relevant sensor module's identifier and the temperature and humidity data. An alternative method is the use of radio direction finding (RDF)wherein, by combining the direction information from two or more suitably spaced receivers, the source of a transmission (in this case the sensor module transmitter) may be located in space via triangulation. In either case the temperature/humidity data are linked to their originating locations.

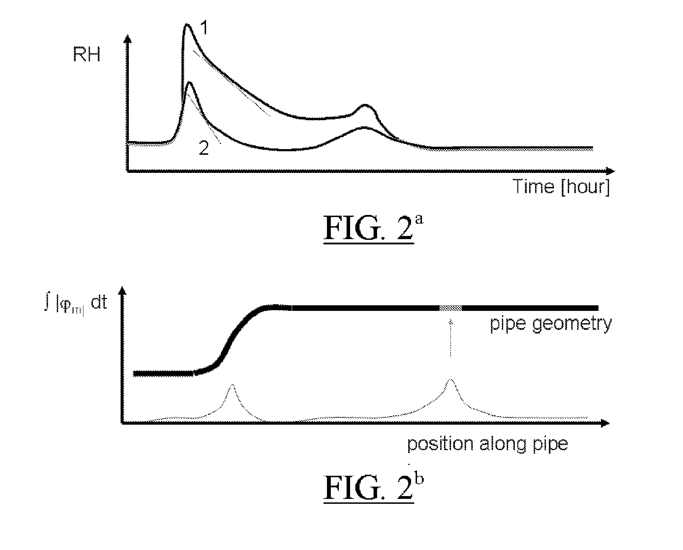

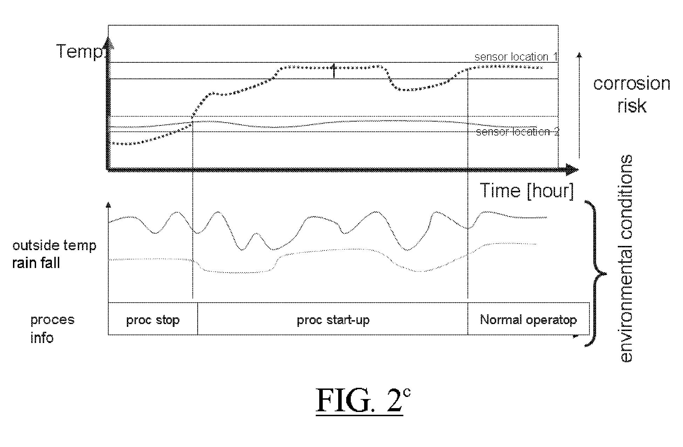

All those data, the local temperature, humidity and, optionally, chloride content, the medium temperature inside the pipeline and the outside (environmental) temperature and humidity are determinative for the creation of (metal) corrosion and (coating) degradation. As most influences can be quantified by means of models which are implemented in the assessment software installed in the processing module 6, the whole pipeline network can continuously be monitored and the assessed corrosion/degradation values (e.g. rates), together with their originating locations, can be displayed by a monitor 16, which is illustrated in figure 2.

Finally some examples will be given, illustrated in figures 2a - 2c of known relationships between several input data and metal corrosion and/or coating degradation rates.

Figure 2a shows the diagram of the humidity (RH) course of two sensor modules at two different locations. The diagram shows that from the course of the humidity sensed by two sensor modules measured, after rainfall (sensed by the weather station 15) it can be concluded that, although the insulation layer at both pipeline locations have become wet, the insulation at location 1, sensed by sensor module 1, dries much slower than the insulation at location 2, represented by the humidity data sent by sensor 2. This information is interpreted by the processing system 6 as an area having a higher corrosion risk, which information can be displayed by the monitor.

Figure 2b illustrates that, based on the local humidity at the various locations, water flux along the pipeline can be assessed. An important factor is the geometry of the pipeline: sensor modules located at the lower part of an ascending portion of the pipeline (shown left) may sense rather much humidity due to the fact that rain water penetrated into the insulation layer will flow towards the lower part in the ascending pipeline. However, if a rather high water flux is sensed in a horizontal portion of the pipeline (right in the figure) the processing system may conclude that such location contains a defect in the pipeline insulation, which is indicated as a location having higher corrosion risk.

Figure 2c shows some temperature courses on the basis of which metal corrosion and/or coating degradation may be estimated by the processing system 6. In general the corrosion risk is higher at temperatures between about 50 - 90 °C, of course depending on the exposure times. In the assessment of corrosion/degradation based on the temperature and the humidity course in the pipeline insulation the influences of the fluid temperature (course) inside the pipeline, the weather (rain, temperature, wind) are taken into account, on the basis of which the corrosion/degradation of the pipeline surface can be assessed by the processing means and displayed accordingly.

## Claims

1. Method for assessing corrosion and/or degradation of a pipeline for the transportation of any medium, the method comprising the following steps:
- providing an array of local sensor modules over the length of the pipeline, arranged for measuring local temperature and humidity values at the pipeline and transmitting those values, along with sensor module identifiers, to processing means;
- receiving said sensor module identifiers and local temperature and humidity values measured at the pipeline and inputting them into assessment means arranged for assessing local indicators related to the local corrosion and/or degradation of the pipeline.

2. Method according to claim 1, the pipeline being surrounded by insulation material, wherein the local sensor modules are arranged to measure the local temperature and humidity values within the insulation material surrounding the pipeline.

3. Method according to claim 1 or 2, wherein temperature values are input into the assessment means, related to the medium flowing through the pipeline.

4. Method according to any preceding claim, wherein temperature and humidity values are input into the assessment means, related to the temperature and humidity outside the pipeline, e.g. due to the weather.

5. Method according to any preceding claims, wherein the local sensor modules are arranged to measure the contents of potentially corrosive components like chloride, ammonia, nitride contents etc.

6. System for assessing corrosion and/or degradation of a pipeline for the transportation of any medium, comprising an array of local sensor modules over the length of the pipeline and arranged for measuring local temperature and humidity values at the pipeline and means for transmitting those values, along with sensor module identifiers, to processing means;
and means for receiving said sensor module identifiers and local temperature and humidity values measured at the pipeline and inputting them into assessment means arranged for assessing local indicators related to the local corrosion and/or degradation of the pipeline.

7. System according to claim 6, comprising wireless transmission means for transmitting said values, along with said sensor module identifiers, to said processing means.

8. System according to claim 6 or 7, the sensor module identifiers being linked to the relevant sensor module's position.

9. System according to claim 6 or 7, the sensor module comprising means for determining the sensor module's geometrical position and inputting that position data to the processing means.

10. System according to claim 6, said local sensor modules comprising or being connected to means for harvesting energy from sunlight or any other light source.

11. System according to claim 6, said local sensor modules comprising or being connected to means for harvesting energy from temperature differences between the pipeline and its environment.
